# EUROPÄISCHE PATENTSCHRIFT

(11) **EP 2 948 414 B1**
(45) Veröffentlichungstag und Bekanntmachung des Hinweises auf die Patenterteilung: **17.03.2021**
(21) Anmeldenummer: 14700390.9
(22) Anmeldetag: 14.01.2014
(51) Int. Cl.: C02F 5/08, C02F 5/10, C02F 103/00, C02F 103/06, C02F 1/68, E03B 3/15

(54) **VERFAHREN ZUR VERHINDERUNG VON ABLAGERUNGEN IN ENTWÄSSERUNGSSYSTEMEN**
METHOD FOR PREVENTING DEPOSITS IN DRAINAGE SYSTEMS
PROCÉDÉ PERMETTANT D'ÉVITER LA FORMATION DE DÉPÔTS DANS DES SYSTÈMES DE DRAINAGE

(30) Priorität: 24.01.2013 CH 293132013
(43) Veröffentlichungstag der Anmeldung: 02.12.2015
(73) Patentinhaber: Wegmüller, Marcel Christian, 4125 Riehen (CH)
(72) Erfinder: Wegmüller, Marcel Christian, 4125 Riehen (CH)
(74) Vertreter: Bremi, Tobias Hans
(86) Internationale Anmeldenummer: PCT/EP2014/050528
(87) Internationale Veröffentlichungsnummer: WO 2014/114517

(56) Entgegenhaltungen:
- EP-A1- 2 479 148
- CH-A5- 694 022
- DE-A1- 10 033 392
- JP-A- S62 180 799

## Beschreibung

### TECHNISCHES GEBIET

Die Erfindung betrifft ein Verfahren zur Verhinderung von Ablagerungen in Entwässerungssystemen.

### STAND DER TECHNIK UND ALLGEMEINER HINTERGRUND

Bei vielen Tätigkeiten des Menschen in und mit der Umwelt benötigt er ein funktionstüchtiges Entwässerungssystem (EWS). Ob beim traditionellen Anlagenbau, wie beispielsweise der Rohstoffgewinnung in Minen und Bergwerken, oder als Bauer auf nassem Gelände, überall sind funktionstüchtige Entwässerungssysteme die Voraussetzung für einen dauerhaften, reibungslosen und gewinnbringenden Betrieb der Anlagen.

Noch wichtiger sind funktionstüchtige Entwässerungssysteme bei den Gebäuden des Hoch- und Tiefbaus. Bei den Hochbauten verfügen vor allem die grossen Bauten wie Hochhäuser, Hotelanlagen, Einkaufszentren, Fussballplätze oder Wohnüberbauungen über nennenswerte Entwässerungssysteme. Bei Tiefbauten, wie z.B. Flugplätzen, Staumauern, Strassen, Bahnanlagen, und Tunnelbauwerken, gehören Entwässerungssysteme zur Standardausrüstung und sind überall auf der Welt anzutreffen. Insbesondere bei unterirdischen Tiefbauwerken mit hoher Überdeckung wie z.B. U-Bahnhöfen, Wasserkraftzentralen, oder Tunnelbauten wird viel Geld in den Bau langfristig funktionstüchtiger Entwässerungssysteme investiert.

Für die vorliegende Erfindung wollen wir alle Entwässerungssysteme, unabhängig ob sie zu einer Anlage, oder einem Gebäude des Hoch - oder Tiefbaus gehören, als Bauwerksentwässerungssysteme bezeichnen.

Beim Betrieb all dieser Entwässerungssysteme fallen Wässer an, die gelöste Wasserinhaltsstoffe mitführen, die im EWS selbst ausfallen und zu weichen, schlammartigen bis harten Ablagerungen führen können. Auf der Erdoberfläche wie beispielsweise im Hochbau spricht man dabei von Sicker- oder Grundwässern, während dem im Untergrund, wie beispielsweise im Tiefbau, fast ausschliesslich von Bergwässern die Rede ist.

Unter Wässer, die in Entwässerungssystemen anfallen, soll, für die vorliegende Erfindung, die Summe aller möglichen Wasserzuflüsse, verstanden werden. Diese Zuflüsse können verschiedener Herkunft sein, wie beispielsweise Grund-, Sicker-, Karst- oder normale Bergwässer einzeln oder in Mischungen. Eine klare Abgrenzung zwischen Grund-, Sicker-, Karst- und Bergwasser zu definieren ist fast unmöglich, denn gerade im Übergangsbereich von Hoch- und Tiefbau treffen wir auf eine Vielzahl von Mischformen. Zudem können auch oberflächennahe Sickerwässer sehr viele Mineralstoffe aufweisen und stärkere Ablagerungen verursachen als sehr tief gelegene EWS von grossen Tunnelbauwerken. Der grösste Anwendungsbereich der vorliegenden Erfindung sind die EWS des Tiefbaus weshalb wir alle anfallenden Wässer in Entwässerungssystemen, unabhängig von ihrer Herkunft, nur kurz als Bergwässer bezeichnen wollen.

Ob das anfallende Bergwasser in einem EWS Ablagerungen verursacht und wenn ja, ob diese hart sind oder nicht, hängt von der Mineralisation des ursprünglichen Bergwassers ab und von dessen Veränderungen beim Eintritt in das EWS, bis zu dessen Übergabe an den Vorfluter.

Beim Eintritt des Bergwassers in das Entwässerungssystem verändern sich die physikalischen Bedingungen derart, dass die ursprünglich gelösten Wasserinhaltsstoffe harte, fest haftende Verkrustungen bilden, welche in amorpher oder kristalliner Form vorliegen können. Oft sind diese Ablagerungen zu Beginn weich, können sich aber im Laufe der Zeit ebenfalls verhärten. Nur wenige bleiben dauerhaft weich. Hauptverursacher dieser Ablagerungen ist die Kalklöslichkeit des Bergwassers. Da beim Zuströmen des Bergwassers zum EWS des Bauwerks ein Druckabfall entsteht, kommt es zur Ausgasung des gelösten CO₂. Als Gegenreaktion wird Kalk aus dem Bergwasser ausgeschieden. Zudem erhöhen basische Baustoffe, allen voran die Zemente, den pH-Wert dieser Wässer, was die Bildung der Verkrustungen ebenfalls stark begünstigt.

Gerade im Tiefbau bestehen die Ablagerungen zum weitaus grössten Teil aus Kalk (meist > 95%), der aus dem Bergwasser ausgeschieden wird, in Kombination mit unbedeutenden Mengen anderer Ionen wie Silicium, Magnesium, Barium, Eisen und dergleichen. In seltenen Fällen kann es zur Ansammlung von Eisenocker kommen, dessen Konsistenz gelartig ist und ebenfalls zu Verstopfungen im Entwässerungssystem führen kann. Daneben gibt es noch andere, i.d.R. untergeordnete Parameter, die die Verkrustungsbildung beeinflussen, wie z. B. die Temperatur oder die Mischung verschiedener Wässer.

Diese vorwiegend anorganischen Wasserinhaltsstoffe verursachen im unzugänglichen (primäres EWS) und zugänglichen (sekundäres EWS) Teil des Entwässerungssystems oft harte Verkrustungen. Das unzugängliche Entwässerungssystem umfasst die Elemente des Entwässerungssystems, die nach Fertigstellung der Anlage - und/oder des Bauwerks nicht mehr frei zugänglich sind, wie z.B. bei einem Gebäude der umgebende Baugrund, aussen liegende Noppenbahnen bzw. -streifen, Drainagematten, Vliese, Drainagebohrungen, Sickerpackungen um die Drainagerohre herum, Sickerschichten, Öffnungen der Drainagerohre (aussen) und dgl. Dieser Teil des EWS kann während des Betriebs der Anlage- und/oder Bauwerks nicht mehr unterhalten werden.

Das zugängliche Entwässerungssystem einer Anlage- und/oder Bauwerks beinhaltet die nach der Fertigstellung des Gebäudes frei zugänglichen Elemente des EWS wie z.B. die Drainagerohre (innen), Schächte, Schlammsammler, Wasserableitungen, Hauptentwässerungsleitungen und dgl. Dieser Teil des EWS kann während des Betriebs der Anlage- und/oder Bauwerks unterhalten werden

Primäre und sekundäre Entwässerungssysteme treffen wir vor allem bei Gebäuden des Hoch- und Tiefbaus an, während bei Anlagen wie beispielsweise in Erzbergwerken die Entwässerungssysteme offen ausgebildet werden, damit sie besser unterhalten werden können. Im Anlagenbau treffen wir also vorwiegend auf sekundäre EWS.

Die Verkrustungen verkleinern den Abflussquerschnitt der Entwässerungssysteme, so dass die Wassermengen nicht mehr frei abfliessen können und dadurch ein Rückstau gebildet wird, der zu grossen Schäden führen kann. Die zurzeit üblichen Verfahren zum Entfernen dieser Verkrustungen aus dem EWS sind die elektromechanische Reinigung sowie die Hochdruckspülung oder das Hochdruckfräsen mit Wasser. Diese Verfahren sind aufwändig, teuer und führen zu Betriebsunterbrüchen.

Nur der regelmässige Unterhalt am Entwässerungssystem garantiert die dauerhafte Funktionstüchtigkeit des Tiefbauwerks. Der wichtigste Teil der Unterhaltsarbeiten besteht aus der regelmässigen Reinigung des EWS. Normalerweise werden dazu die Drainage- und Entwässerungsrohre innwendig gespült. Dennoch entstehen durch die anfallenden Bergwässer sehr oft harte bis sehr harte Verkrustungen, die fast immer aus Kalk bestehen. Das Entfernen dieser Kalkschichten ist zeitintensiv, aufwändig, und kostet sehr viel Geld. Oft lassen sich diese Verkrustungen mit konventionellen Hochdruckspülungen nicht mehr entfernen und es müssen andere Reinigungsverfahren eingesetzt werden. Zu diesen zählen Fräsen und oder Kettenschleudern. Diese Verfahren führen aber zu einem grossen Verschleiss des EWS und man sollte wenn immer möglich darauf verzichten.

Der Verlust oder das Fehlen eines funktionstüchtigen Entwässerungssystems kann je nach Gebäude katastrophale Folgen für den Betrieb sowie für die Dauerhaftigkeit der Anlage nach sich ziehen. Ohne EWS oder bei defektem EWS staut sich das anfallende Wasser auf und es entsteht ein Wasserdruck, der zu grossen Schäden führen kann. So kann der Wasserdruck die Belastbarkeit der Tragstruktur übersteigen und zudem die Korrosion der verwendeten Baumaterialien potenziell beschleunigen. Funktionsuntüchtige EWS können dazu führen, dass Wasser in das Gebäude eindringt. Je nach Gebäude kommt es dadurch zur Eisbildung auf Fahrbahnen oder die Luftfeuchtigkeit wird so stark erhöht, dass die elektronischen Systeme ausfallen. Beim Bau des Gotthard Basistunnels wurde diesem Aspekt, der Gefahr einer zu hohen Luftfeuchte, eine ausserordentlich wichtige Bedeutung beigemessen.

Bei der Unterhaltung von Entwässerungssystemen fallen also hohe Kosten an. Der Unterhalt des Entwässerungssystems kann so teuer werden, dass sich einzelne Bauherren dazu entschliessen, ohne Entwässerungssystem zu bauen d.h. auf ein Entwässerungssystem zu verzichten und stattdessen das Gebäude so stark auszubilden, dass der entstehende Wasserdruck aufgenommen werden kann, ohne Schäden in Kauf zu nehmen. Dies ist zwar deutlich teurer, scheint sich aber dennoch für gewisse Gebäude zu lohnen.

Aus diesem Grund wurden in den vergangenen rund 20 Jahren verschiedene Verfahren zur Konditionierung von Bergwässern in Bauwerksentwässerungs-systemen entwickelt und verfeinert.

Bei all diesen Verfahren, wird über ein Verteilsystem, mit und ohne Dosieranlagen, an einer oder mehreren Stellen, des unzugänglichen oder zugänglichen Entwässerungssystems, ein Wirkstoff, der so genannte Härtestabilisator, punktuell oder flächendeckend in wässriger und/oder fester Form zugegeben. Dieser Härtestabilisator vermischt sich auf dem nachfolgenden Fliessweg mit den Wässern im Entwässerungssystem und schützt dieses damit vor der Bildung von harten Verkrustungen. Erst beim Verlassen des Bauwerks, unmittelbar vor der Einleitung in den Vorfluter, soll die Konzentration des Härtestabilisators im Bergwasser, den wirksamen Gehalt unterschreiten. Dadurch ist das EWS auf seiner ganzen Länge geschützt.

Diese Art der Wasserbehandlung ist im Tiefbau nun fast seit 20 Jahren bekannt und wurde u.a. in den folgenden Patentschriften ausführlich dargestellt. All diese Verfahren sind im Tiefbau unter dem Begriff "Verfahren zur Härtestabilisation von Bergwässern" bekannt. Im Folgenden soll dieser Begriff übernommen werden.

EP 638 049 Verfahren zur Verhinderung von Ablagerungen in einem Bauwerksentwässerungssystem: Hier wird der Einsatz flüssiger Wasserkonditionierungsmittel in Bauwerksentwässerungssystemen beschrieben CH 689 452 Verfahren zur Verhinderung von zementbedingten Ablagerungen in einem Bauwerksentwässerungssystem. Hier wird der Einsatz von Polyasparaginsäure, als Wirkstoff, in fester und/oder flüssiger Form zur Behandlung von Wässern in Bauwerksentwässerungssystemen beschrieben.

CH 694 022 Kalkschutzsteine und Verfahren zur Minimierung der Bildung von Ablagerungen in Bauwerksentwässerungssystemen. Diese Patentschrift beschreibt die Verwendung von Polysuccinimid, als Wirkstoff, in fester Form zu so genannten Depotsteinen gepresst zur Verhinderung von Ablagerungen in Entwässerungssystemen. EP 1724240B1 Verfahren zur Konditionierung von Bergwässern in primären Entwässerungssystemen von Tunnelbauwerken. Hier wird das Rückführungssystem zur Verhinderung von Ablagerungen im primären Teil eines EWS beschrieben.

Der Härtestabilisator kann in fester und/oder flüssiger Form in den zugänglichen wie auch in den unzugänglichen Teil eines EWS eingebracht werden. Als flüssige Härtestabilisatoren besonders geeignet sind Fruchtsäuren, Polyasparaginsäure sowie Polycarbonsäuren. In fester Form kommen Polysuccinimid, Polycarbon- sowie Fruchtsäuren, alle in Verbindung mit geeigneten Trägersubstanzen in Frage.

Wegen der Zugabe des Härtestabilisators zum Wasser muss aber fast immer mit der Bildung von Bakterien- und Algenschichten innerhalb des zu behandelnden EWS gerechnet werden. Gerade diese so genannten Biofilme stellen ungeahnte Probleme dar, die eine zuverlässige und wirtschaftliche Vermarktung der Verfahren der Härtestabilisation oft verunmöglichen.

Biofilme bestehen aus einer dünnen Schleimschicht (Film), in der Mikroorganismen (z.B. Bakterien, Algen, Pilze, Protozoen) eingebettet sind. Biofilme entstehen, wenn Mikroorganismen sich an Grenzflächen ansiedeln. Sie bilden sich überwiegend in wässrigen Systemen, entweder auf der Wasseroberfläche oder auf einer Grenzfläche zu einer festen Phase wie beispielsweise der Rohroberfläche des EWS. Biofilme können in den EWS des Tiefbaus Schichtstärken von mehr als 10cm erreichen und auch bei hohen Fliessgeschwindigkeiten existieren. Oft ist dabei der ganze Querschnitt des EWS von der Biofilmschicht betroffen. In der Nähe der Zugabe der Härtestabilisatoren treffen wir in der Regel die stärksten Biofilme an, mit zunehmender Verdünnung durch die zufliessenden Bergwasser reduziert sich der Biofilm in der Regel. Biofilme können sich problemlos über das ganze EWS ausbreiten.

Der Biofilm enthält außer den Mikroorganismen hauptsächlich Wasser. Oft werden von der Matrix der Biofilme auch anorganische Partikel oder Gasbläschen eingeschlossen. Die Gasphase kann je nach Art der Mikroorganismen mit Stickstoff, Kohlenstoffdioxid, Methan oder Schwefelwasserstoff angereichert sein.

Gerade auch diese Gasbildung kann im Tiefbau verheerende Folgen haben. So wurden in Österreich zwei Bauarbeiter bewusstlos als sie Reinigungsarbeiten am EWS ausführen wollten und dabei Gase der Biofilme eingeatmet haben. Die im EWS enthaltenen Gase waren so stark, dass sie das Bewusstsein verloren. Daraufhin verbot der Bauherr den weiteren Einsatz der Härtestabilisationsverfahren für das betroffene Bauwerk.

Des Weiteren reduzieren diese Biofilme die Konzentrationen an Härtestabilisator in den Bergwässern des EWS, wodurch die Wirkung der Verfahren der Härtestabilisation reduziert wird.

Je nach der Stärke dieser Bio-Schichten können sie sogar zu einem Verschluss wichtiger Teile des Entwässerungssystems führen oder auch die Anlagen zur Konditionierung der Bergwässer ausser Gefecht setzen. Ein wichtiges Verfahren der Härtestabilisation im Tiefbau wird als so genanntes Rückführungssystem (RFS) bezeichnet. Dabei wird mittels Verteilleitungen bereits vorkonditioniertes Bergwassers in den primären Teil des EWS geführt. Dort vermischt sich das vorkonditionierte Bergwasser mit frischem Bergwasser und schützt dabei den primären Teil des EWS vor der Bildung von Ablagerungen. Ausführlich beschrieben wird dieses Rückführungssystem in der EP 1 724 240. Treffen wir nun auf Biofilmschichten im EWS besteht die Gefahr, dass Teile der Verteilleitungen und deren Öffnungen, durch das bereits vorkonditionierte Bergwasser, bei der Rückführung in den primären Teil des EWS, durch diesen Biofilm, verstopft und wertlos werden.

Ein weiterer Nachteil all dieser Verfahren zur Härtestabilisation von Bergwässern liegt darin, dass durch die Zugabe von Härtestabilisator zum Bergwasser immer eine, wenn auch geringe, zusätzliche Belastung des Vorfluters entsteht.

JPS62180799 beschreibt ein Reinigungsmittel zum Entfernen von Schleim, Ablagerungen usw., die sich im Wasserdurchgangsloch eines Brunnens gebildet haben wobei Peroxide und Hypochloriten gemischt werden. Z. B. Natriumperborat und z. B. Calciumhypochlorit werden in eine Tablette oder ein festes Mittel mit einem spezifischen Gewicht von wenigstens 1,20 verarbeitet. Eine org. Säure (z. B. Weinsäure) wird als Schaumhilfsmittel in einem Anteil von 1 / 5 - 1 / 20 des Hauptmaterials verwendet, oder schwach saure Salze (z. B. Calciumphosphat) werden in einem Anteil von 1 / 2 - 1 / 5 des Materials verwendet. Dieses Reinigungsmittel für Brunnen löst sich während des Fallens in den Brunnen nur geringfügig auf, und der größte Teil des Mittels zeigt eine gute Auflösung am Boden des Brunnens. Das Mittel ist daher als Reinigungsmittel für den Schleim, und die Ablagerungen usw. nützlich, die in dem Wasser gebildet werden, das einen Teil des Brunnens passiert.

EP2479148A1 beschreibt ein Verfahren zur Reduktion der Spülkosten von Entwässerungssystemen, welches dadurch gekennzeichnet ist, dass dem abfliessenden Wasser im Entwässerungssystem eine wirksame Menge eines Wirkstoffs zudosiert wird und dieser einen wirksamen Gehalt an Fruchtsäure enthält.

In der DE 100 33 392 wird zum Reduzieren bzw. Auflösen von Ablagerungen von Kalk oder Kalziumverbindungen an organischen oder anorganischen Materialien, die mit Kalk enthaltenden Flüssigkeiten in Kontakt kommen, z.B. Adern des menschlichen Körpers, vorgeschlagen, den Flüssigkeiten Präparate in flüssiger Form beizugeben, die der Gruppe von Magnesiumsulfat, Natriumkarbonat, Natriumsulfat, Natriumchlorid, Aluminiumsulfat und Phosphoroxid entstammen.

### DARSTELLUNG DER ERFINDUNG

Das Ziel der vorliegenden Erfindung war es deshalb, ein Verfahren zu entwickeln, das es erlaubt, die Bildung von Ablagerungen in Entwässerungssystemen von Bauwerken zu verhindern oder zumindest deutlich zu reduzieren. Dabei sollen die negativen Eigenschaften der Härtestabilisation wie die Belastung der Vorfluter und/oder die Bildung von Biofilmschichten weitgehend eliminiert werden.

Die Verfahren der Härtestabilisation zielen darauf ab, das Kristallwachstum der sich ablagernden Stoffe zu beeinflussen. Härtestabilisatoren machen sich dabei oftmals den Thresholdeffekt zu Nutze, was zu einem geringen Verbrauch an Härtestabilisator führt. In vielen Fällen werden aber auch Komplexiermittel, wie beispielsweise Fruchtsäuren verwendet, die eine chemische oder Komplex-Bindung mit den sich kristallisierenden Stoffen z. b. Calciumcarbonat eingehen.

Nun wurde aber auf Basis von Untersuchungen eine ganz andere Möglichkeit gefunden, die Bildung der Ablagerungen zu verhindern. Das erfindungsgemässe Verfahren zielt darauf ab, die Löslichkeit der Wasserinhaltsstoffe zu verändern, indem Mineralsalze direkt zum anfallenden Bergwasser zu dosiert werden. Durch die Zugabe von Fremdionen zum Bergwasser verändert sich die Löslichkeit der Wasserinhaltstoffe. Grundsätzlich gilt, dass bei einer gesättigten Lösung die Zugabe eines anderen, leichter löslichen Salzes, ohne gemeinsames Ion mit dem ersten, dessen Löslichkeit erhöht. Als Salze bezeichnet man chemische Verbindungen, die aus positiv geladenen Ionen (Kationen) und negativ geladenen Ionen (Anionen), aufgebaut sind. Zwischen diesen Ionen liegen ionische Bindungen vor. Bei anorganischen Salzen werden die Kationen häufig von Metallen und die Anionen häufig von Nichtmetallen oder deren Oxiden gebildet. Als Feststoff bilden sie gemeinsam ein Ionengitter. Als organische Salze bezeichnet man alle Verbindungen, bei denen mindestens ein Anion oder Kation eine organische Verbindung ist. Eine Liste von möglichen Kationen und Anionen ist unten angegeben.

| **Kationen** | | | **Anionen** | | | |
|---|---|---|---|---|---|---|
| **1-wertig** | **2-wertig** | **3wertig** | **1-wertig** | **2-wertig** | **oxidisch** | **metallisch** |
| Kalium, K⁺ | Calcium.Ca²⁺ | Eisen(III), Fe³⁺ | Fluoride. F⁻ | Oxide. O²⁻ | Carbonate. CO₃²⁻ | Chromate, CrO₄²⁻ |
| Natrium, Na⁺ | Magnesium,Mg²⁺ | Aluminium, Al³⁺ | Chloride, Cl⁻ | Sulfide. S²⁻ | Sulfate. SO₄²⁻ | Permanganate, MnO₄⁻ |
| Ammonium,NH₄⁺ | Eisen(II), Fe²⁺ | | Bromide. Br⁻ | | Phosphate, PO₄³⁻ | **komplexe** |
| | | | Iodide, I⁻ | | Nitrate, NO₃⁻ | Hexacyanoferrate(II), [Fe^{II}(CN)₆]⁴⁻ |

Einige Salze eignen sich aber weniger für die hier beschriebenen Zwecke, da sie die Umwelt belasten können wie beispielsweise Ammonium- Aluminium- und Eisenverbindungen oder auch Iodide, Sulfide, Nitrate, Chromate, Permanganate oder Hexacyanoferrate. Andere Salze, wie beispielsweise Bariumsulfat, sind relativ teuer und eignen sich deshalb nur bedingt für die vorgesehene Verwendung.

Betrachten wir beispielsweise das in unserem Fall äusserst wichtige System CO₂-H₂O-CaCO₃, so stellen wir fest, dass es eine ganze Reihe von Möglichkeiten gibt, durch die Zugabe eines anderen, leichter löslichen Salzes die Löslichkeit des Systems CO₂-H₂O-CaCO₃ zu erhöhen. Zur Auswahl stehen, nach der Regel der Fremdionen, beispielsweise die Salze des Natriums, ausgenommen Natriumcarbonat, die Salze des Magnesiums ausgenommen Magnesiumcarbonat, die Salze des Kalium ausgenommen Kaliumcarbonat. Im Vordergrund steht dabei die Verwendung dieser Salze in Form von Chloriden und Sulfaten. Es gibt wenige Ausnahmen von dieser Regel, aber Calciumchlorid erhöht ebenfalls die Löslichkeit des Systems CO₂-H₂O-CaCO₃ und eignet sich deshalb ebenfalls als Mineralsalz gegen die Bildung von Kalkablagerungen.

Nach der Regel der Fremdionen verbleiben aber für die Anwendungen, die hier von Interesse sind, die Salze von Natrium, und/oder Kalium und/oder Magnesium mit geeigneten Anionen wie Sulfat und/oder Chlorid oder Hydrate davon. Konkreter also Natriumsulfat und -chlorid, Magnesiumsulfat- und chlorid, sowie Kaliumsulfat - und chlorid, die entsprechenden Hydrate, sowie gegebenenfalls Mischsalze wie Kalziummagnesiumchlorid, Natriummagnesiumchlorid, etc.. Im Folgenden wollen wir sie als Stabilisationssalze bezeichnen wegen ihrer Fähigkeit, den Kalkgehalt des Bergwassers zu stabilisieren und die Ablagerung des Kalks aus Bergwasser zu verhindern. Diese Salze eignen sich besonders gut für das erfindungsgemässe Verfahren weil sie, bei einer Gesamtbeurteilung aller Salze, die u.a. sowohl die Kosten, die Herstellung, die Verfügbarkeit und die Umweltbelastung, die durch diese Salze verursacht werden, berücksichtigt, besonders gut abschneiden. Dies bedeutet nicht, dass die anderen Salze nicht funktionieren würden, gesamthaft betrachtet aber für viele Anwendungen weniger gut.

Die Zugabe der Stabilisationssalze zum Bergwasser kann in fester oder flüssiger Form erfolgen. Die Löslichkeit der Salze ist so hoch, sodass eine gute Vermischung mit dem anfallenden Bergwasser in kurzer Zeit gewährleistet ist. Die notwendigen Dosiermengen richten sich nach dem Grad der Calciumübersättigung des Bergwassers und lassen sich durch den Langelier - Index oder den Stabilitätsindex nach Ryznar berechnen.

Die Anwendung der Stabilisationssalze erfolgt gleich oder analog wie die bisher verwendeten Härtestabilisatoren wie sie in den Patentschriften EP 638 049, CH 689 452 und EP 1 724 240 beschrieben sind.

Bevorzugterweise wird das Stabilisationssalz in flüssiger Form, d.h. als wässrige Lösung, mittels einer Dosieranlage zu Beginn des EWS zum anfallenden Bergwasser zudosiert. Auf dem nachfolgenden Fliessweg vermischt sich das gelöste Stabilisationssalz mit dem zufliessenden Bergwasser und schützt es dadurch vor der Bildung von harten Ablagerungen. Der Schutz kommt dadurch zustande, dass durch die Zugabe der Salze die Löslichkeit des Systems CO₂-H₂O-CaCO₃ erhöht wird. In der Regel wird der Aktivitätskoeffizient des Ca²⁺ erniedrigt, wodurch mehr Ca²⁺ in Lösung geht. Die Zugabe der Salze kann aber auch eine Auswirkung auf die HCO₃⁻-Ionen haben, die dadurch nicht mehr für die Kalkbildung zur Verfügung stehen.

Die Vorteile der Zugabe der Stabilitätssalze anstelle der herkömmlichen Zugabe von Härtestabilisatoren liegen auf der Hand. Die Zugabe der vorgeschlagenen Salze ist umweltfreundlich, da von Natur aus in jedem Bergwasser bereits Mineralsalze in weit größeren Mengen vorhanden sind. Diese Mineralsalze sind sogar lebensnotwenig für Mensch, Tier und Pflanzen. Erst in sehr hohen Konzentrationen (über 1-10 g/l) können die Mineralsalze u.U. Probleme bereiten, in den hier bevorzugt vorgeschlagenen Anwendungskonzentrationen (0,0001 - 1g/l) für die Behandlung von Bergwasser spielen sie aber keine Rolle. Nach der Erfindung bewegen sich die Konzentrationen der vorgeschlagenen Salze zwischen 1-200 ppm gemessen am Ende des EWS unmittelbar vor der Einleitung in den Vorfluter. Die Angaben in ppm beziehen sich dabei jeweils auf die Masse des eingesetzten trockenen Salzes und nicht auf die entsprechenden Hydrate, und die Mengen werden theoretisch berechnet aus der Zugabe im Tunnel und dem Bergwasserfluss an den Ausgängen des Tunnels. Es zeigt sich dabei, dass insbesondere z.B. bei Magnesiumchlorid bei stark zu Ablagerungen neigenden Bedingungen 10-50 ppm, vorzugsweise 12-20 ppm gut geeignet sind, bei mittlerer Ablagerungstendenz 5 - 15 ppm, vorzugsweise 7 - 10 ppm und bei eher geringer Ablagerungstendenz 2 - 7, vorzugsweise 3 - 5 ppm.

Die Stabilisationssalze verursachen zudem keine Biofilmschichten im EWS wie die herkömmlichen Härtestabilisatoren. Dadurch verbessert sich die Funktionstüchtigkeit und der Wirkungsgrad des Verfahrens. Die Stabilisationssalze sind günstig im Einkauf und stellen damit diesbezüglich alle anderen bekannten Härtestabilisatoren in den Schatten. Die Verfügbarkeit der Stabilisationssalze ist sehr gut und deren Herstellung bezogen auf die benötigte Menge unproblematisch.

Bei einzelnen Bauwerken kann es angezeigt sein, die Stabilisationssalze in Kombination oder alternierend mit den herkömmlichen Härtestabilisatoren zu verwenden. Gerade dort, wo sehr hohe pH-Werte des Bergwassers auftreten (über 10 - 11) kann beispielsweise der Einsatz von Milchsäure gleichzeitig mit den vorgeschlagenen Stabilisationssalzen, vorzugsweise Magnesiumchlorid, oder alternierend, in Abständen von rund 3 bis 25 Tagen, mit dem Einsatz von den vorgeschlagenen Stabilisationssalzen, vorzugsweise Magnesiumchlorid, gute Resultate liefern. Durch den gleichzeitigen oder alternierenden Einsatz kann die Wirkung des Verfahrens bei hohen pH-Werten und den damit verbundenen hohen OH-Ionenkonzentrationen gewahrt bleiben, gleichzeitig wird der Aufbau einer Biofilmschicht vermindert oder sogar verhindert. Bei sehr hohen pH-Werten besteht die Gefahr, dass sich durch die Zugabe von Magnesiumchlorid Magnesiumcarbonat aus dem Bergwasser bildet.

Zu den bevorzugten Härtestabilisatoren, die in Kombination, gleichzeitig oder alternierend, mit Mineralsalzen verwendet werden können, zählen im vorgeschlagenen Verfahren die Milchsäure, die Polyasparaginsäure, Polysuccinimid sowie Polycarbonsäuren. Zusammenfassend betrifft damit die vorgeschlagene Erfindung generell ein Verfahren zur Verhinderung von Ablagerungen in Entwässerungssystemen von Bauwerken, welches dadurch gekennzeichnet ist, dass Mineralsalze zum Bergwasser zugegeben werden. Bei den Mineralsalzen handelt es sich dabei um Stabilisationssalze.

Bei den Stabilisationssalzen handelt es sich um wenigstens ein Salz ausgewählt aus der folgenden Gruppe: Natriumsulfat, Natriumchlorid, Magnesiumsulfat, Magnesiumchlorid, Kalziummagnesiumchlorid, Natriummagnesiumchlorid, Kaliumsulfat, Kaliumchlorid, Kalziumchlorid oder Hydrate, Mischsalze, respektive Mischungen davon, wobei die Stabilisationssalze die Bildung von neuen organischen und/oder anorganischen Verkrustungen, insbesondere in Form von Kalkablagerungen, verhindern und ggf. zusätzlich den Abbau von bestehenden organischen und/oder anorganischen Verkrustungen, insbesondere in Form von Kalkablagerungen, induzieren oder fördern. Die Stabilisationssalze werden in einer Menge zum zu behandelnden Bergwasser zugegeben, dass am Ende des Entwässerungssystems eine Konzentration in Wasser im Bereich von 1-200 ppm, bevorzugt im Bereich von 2 - 50 ppm oder 3 - 20 ppm gegeben ist, wobei die Zugabe vorzugsweise am Anfang des Entwässerungssystems erfolgt sowie gegebenenfalls an einer oder mehreren weiteren Stellen entlang des Flusses des Bergwassers im Bauwerk. Diese Angaben in ppm sind massebezogen und werden in der Regel indirekt bestimmt, indem die zugegebene Menge an trockenem Salz pro betrachtete Zeiteinheit (bei Zugabe der Salze in wässriger Lösung muss mit dem entsprechenden Trocken-Gehalt gerechnet werden) bezogen wird auf den Bergwasserfluss (Masse pro betrachtete Zeiteinheit) ausgangs des Tunnels berechnet wird.

Die Mineralsalze können dabei allein oder zeitlich und/oder örtlich alternierend und/oder gleichzeitig aus verschiedenen Behältern und/oder im Gemisch (Kombination) oder auch als Mischsalz mit anderen Härtestabilisatoren wie insbesondere bevorzugt Fruchtsäuren, insbesondere Milchsäure, Polyasparaginsäure oder Polycarbonsäure, dem zu behandelnden Bergwasser zugegeben werden.

Die Mineralsalze können in flüssiger, d.h. in wässriger gelöster Form, z.B. mittels einer Dosieranlage, oder in fester Form als Depotsteine, dem sekundären Teil des Entwässerungssystems zugegeben werden.

Die Mineralsalze können dabei in flüssiger, d.h. gelöster oder in fester Form als Depotsteine, in den primären Teil des Entwässerungssystems eingebracht werden.

Bei der festen Form kann es sich um Depotsteine handeln, die einen wirksamen Gehalt an Mineralsalzen aufweisen.

Die Mineralsalze können mittels Rückführungssystem in das primäre Entwässerungssystem gebracht werden.

Die Stabilisationssalze werden ununterbrochen (kontinuierlich) oder in Intervallen zudosiert werden.

Als anderer Härtestabilisator kann dabei bevorzugt ausschließlich eine im wesentlichen 80-95%ige wässrige Lösung von Milchsäure, bevorzugt in technischer Qualität, verwendet werden.

Das Entwässerungssystem befindet sich in einem Tunnel oder ist an einem Tunnel angeschlossen.

Bei dem Mineralsalz kann es sich um Natriumchlorid und/oder Magnesiumchlorid handeln. Es kann sich auch um Magnesiumchlorid handeln, und dieses kann dem Bergwasser als wässrige Lösung mit einem Gehalt von 25-33 Gew.%, vorzugsweise im Bereich von 30-33 Gew.% zugeführt werden.

Oder es kann sich bei Mineralsalz um Natriumchlorid handeln, und dieses dem Bergwasser als wässrige Lösung mit einem Gehalt von 20-35 Gew.%, vorzugsweise im Bereich von 25-33 Gew.% zugeführt werden.

Weiter betrifft die Erfindung die Verwendung eines Stabilisationssalzes wie beansprucht, vorzugsweise ausgewählt aus der folgenden Gruppe: Natriumsulfat, Natriumchlorid, Magnesiumsulfat, Magnesiumchlorid, Kaliumsulfat, Kaliumchlorid, Kalziumchlorid oder Mischungen davon, zur Verhinderung von Ablagerungen in primären und/oder sekundären Entwässerungssystemen von Bauwerken, indem das Stabilisationssalz zum Bergwasser als bevorzugt wässrige Lösung, bevorzugt dem sekundären Entwässerungssystem, und/oder als Feststoff, bevorzugt dem primären und/oder sekundären Entwässerungssystem, zugegeben wird.

Zudem betrifft die Erfindung einen Depotstein oder ein Depotgranulat wie beansprucht mit einem wirksamen Gehalt von wenigstens 10 Gew.%, vorzugsweise von wenigstens 25 Gew.% eines derartigen Stabilisationssalzes, vorzugsweise ausgewählt aus der folgenden Gruppe: Natriumsulfat, Natriumchlorid, Magnesiumsulfat, Magnesiumchlorid, Kaliumsulfat, Kaliumchlorid, Kalziumchlorid Kalziummagnesiumchlorid, Natriummagnesiumchlorid oder Hydrate oder Mischungen davon, insbesondere bevorzugt auf Basis von Carnallit (KMgCl3 • 6H2O), gegebenenfalls in Kombination mit anderen Stabilisationssystemen wie vorzugsweise Polyasparaginsäure und/oder Polycarbonsäure und/oder Milchsäure, zur Verhinderung von Ablagerungen in primären Entwässerungssystemen von Bauwerken.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnung beschrieben, die lediglich zur Erläuterung dient und nicht einschränkend auszulegen ist. In der Zeichnung zeigt:

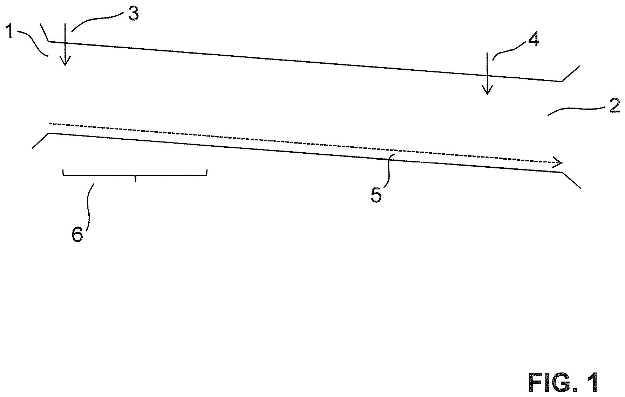

- Fig. 1: zeigt einen schematischen Schnitt durch einen Tunnel und die Zugabe der Stabilisationssalze zum Bergwasser; dargestellt sind die Ströme im sekundären Entwässerungssystem.

### BESCHREIBUNG BEVORZUGTER AUSFÜHRUNGSFORMEN

Um die Wirksamkeit der Stabilisationssalze zu überprüfen wurde eine Versuchsreihe in einem Tunnel der Schweizerischen Bundesbahnen (SBB) gestartet. Der Tunnel gilt als schwieriger "Kandidat", weil die Ablagerungen in der Rigole des Tunnels stark sind. Hier müssen deshalb die Dosierkonzentrationen vergleichsweise hoch angesetzt werden. Dort wurde zuvor mit einer konventionellen Härtestabilisationsanlage Milchsäure in konstanten Mengen von rund 800kg/Jahr in die Rigole des Entwässerungssystems nahe dem Südportal zudosiert. Die alleinige Zugabe der Milchsäure hatte zur Folge, dass sich ein dezimeterdicker Biofilm in der Rigole ansiedelte, der von der Dosierstelle aus das ganze Entwässerungssystem eroberte. Der Aufbau des Biofilms benötigte rund 6 Monate. Durch Spülungen und Reinigungen des Entwässerungssystems lässt sich der Biofilm entfernen, er kehrt dann aber bereits nach 3 Monaten wieder voll zurück.

Zudem entstanden immer noch 50% der Kalkablagerungen (vgl. mit der Situation ohne Behandlung) wobei die Ablagerungen weich waren und sich deshalb gut entfernen liessen. Die Versinterungen, die entstehen, wenn die Milchsäurebehandlung ersatzlos ausgesetzt wird, sind gewaltig. Innert eines Jahres bauen sich stellenweise 10cm neuer Kalk in der Rigole auf. Der sich neu bildende Kalk kann bereits nach 1 - 2 Wochen beobachtet werden. Der Kalk wird durch die Verwendung von zementhaltigen Baustoffen im Portalbereich des Tunnels (Jetting) sowie durch die Verfüllung des Werkleitungskanals (Stabilisierung mit Zement) hervorgerufen. Entsprechend hoch ist der pH-Wert des anfallenden Bergwassers (er liegt bei rund 9 bis 10)

Nun wurde mit der Dosierung der gelösten Mineralsalze begonnen. Dazu wurden 200kg Natriumchlorid mit 200 Liter Wasser vermischt. Danach wurde täglich eine konstante Menge von 10Liter dieser Mischung in die Rigole zudosiert. Nach rund einem Monat war die Biofilmschicht verschwunden. Zudem konnten sich keine neuen Ablagerungen bilden und die alten bestehenden Ablagerungen wurden teilweise aufgelöst. Der Jahresverbrauch an Natriumchlorid liegt im Bereich von rund 2000kg. Die anfallende Bergwassermenge liegt am Ende des EWS bei rund 3 - 5 l/s. Jeden Monat wurde dieser Vorgang wiederholt. Bereits nach 3 Wochen war der übliche Biofilm (üblich bei der Anwendung von Milchsäure) verschwunden. Es konnten sich, auf der ganzen behandelten Strecke, gar keine neuen Ablagerungen mehr bilden. Die Produktkonzentrationen im Bergwasser beim Verlassen des Tunnels (am Nordportal) betrugen rund 12ppm.

In einem weiteren Tunnelbauwerk der SBB wurde ein zweiter Versuch durchgeführt. Auch hier wurde bis anhin Milchsäure in konstanten Mengen zu den beiden Drainageleitungen zudosiert. Wiederum hat sich nach einiger Zeit ein erheblicher Biofilm aufgebaut. Die Verbrauchsmenge an Milchsäure betrug bis anhin 2000 kg/Jahr, um die Bildung von neuen Kalkablagerungen vollständig unterbinden zu können. Die anfallende Bergwassermenge liegt am Ende des EWS bei rund 20 l/s.

Hier wurde nun anstelle von Milchsäure ununterbrochen Magnesiumchlorid in konstanten Mengen zum Bergwasser zudosiert. Der Verbrauch an Magnesiumchlorid betrug 3000 kg pro Jahr.

Bei diesem Versuch wurde zuerst der Stahlcontainer von der Milchsäure befreit und danach mit Wasser gespült. Danach wurden 1500Liter einer 32,8% MgCl₂ -Lösung in den Container gefüllt. Danach wurden die Dosiermengen eingestellt und zwar so, dass rund 3 ml/min dieser Lösung in jede der beiden Rigolen zudosiert wurde. Demnach sollte der Container nach 6 Monaten leer sein.

Die Wirkung gegen die Bildung von Kalkablagerungen war vergleichbar mit jener der Milchsäuredosierung, wobei sich aber kein Biofilm entwickelt hat.

Je nach Bergwasserzusammensetzung sollen die Mineralsalze ausgesucht und als flüssige Mischung zudosiert werden. Bei hohen pH-Werten ist die Verwendung von Natriumchlorid zu bevorzugen. Gibt es eher wenig Magnesium im anfallenden Bergwasser, so kann Magnesiumchlorid verwendet werden.

Bei der Verwendung von Mineralsalzen in fester Form kann auf die Lehre der Patentschrift CH 694 022 zurückgegriffen werden. Hier sind die wichtigsten Trägersubstanzen sowie die wichtigsten Härtestabilisatoren erwähnt, die zur Herstellung von Formkörpern, sogenannten Depotsteinen, dienen können. Alle diese Substanzen lassen sich auch in Kombination mit den hier vorgeschlagenen Mineralsalzen verwenden. Es ist dabei die hohe Löslichkeit der Mineralsalze zu beachten. Zudem muss ein wirksamer Gehalt an Mineralsalzen enthalten sein. Dieser wirksame Gehalt an Mineralsalzen liegt vorzugsweise bei mindestens 10% Mineralsalze bezogen auf das Gewicht des Formkörpers. Auch bei dieser Anwendung eignen sich die Stabilisationssalze besonders gut.

Einen weiteren Aspekt bilden die in der Natur vorkommenden Lagerstätten aus Stabilisationssalzen, die als Ausgangsmaterial verwendet werden können. Hier ist deren Verwendung als Depotsteine besonders vorteilhaft. Insbesondere das Mineral "Camallit" eignet sich für die Verwendung als Depotstein hervorragend. Es ist einerseits gut wasserlöslich und besteht zudem aus KMgCl₃ • 6 H₂O. Dieses Material liefert den Rohstoff zur Gewinnung von Magnesium und wird zudem als Düngemittel verwendet. Die Depotsteine können aus dem Rohmaterial zu Formkörpern gepresst und danach eingebaut oder direkt verwendet werden, indem man das Rohmaterial als Granulat beispielsweise auf der Baustelle mit dem Sickerkies der Drainageleitungen mischt und danach diese Mischung um die Drainagerohre einbaut.

Andere mögliche Kandidaten für die Herstellung geeigneter Depotsteine sind Magnesiumacetat (Magnesiumsalz der Essigsäure) oder auch Magnesiumcitrat (Magnesiumsalz der Zitronensäure).

Die Mineralsalze können aber auch direkt in das primäre EWS z.B. in die Sickerpackungen um die Drainagerohre eines Tunnelbauwerks, eingebaut werden. Die Dosierung wird zwar nicht konstant sein aber ein positiver Effekt auf die Bildung von Kalkablagerungen ist sicher. So lassen sich Mineralsalze auch in Bereichen einsetzen, die schwer zugänglich sind, wie beispielsweise die Trasse der Bahnanlagen, insbesondere der Schnellbaustrecken. Auch hier muss der Untergrund entwässert werden und auch hier erschweren Kalkablagerungen den Betrieb. Durch die Besprühung des Trasses mit einem Gemisch aus geeigneten Mineralsalzen und Wasser können die Salze langsam in den Untergrund wandern und so das tiefliegende EWS schützen. Auch bei dieser Anwendung eignen sich die Stabilisationssalze besonders gut.

### BEZUGSZEICHENLISTE

| | | | |
|---|---|---|---|
| 1 | erstes Portal | 4 | zweite Dosierungsstelle |
| 2 | zweites Portal | 5 | Wasserfluss im |
| 3 | erste Dosierungsstelle | | Tunnelbauwerk |

## Patentansprüche

1. Verfahren zur Verhinderung von neuen Ablagerungen in in einem Tunnel sich befindenden oder an einem Tunnel angeschlossenen Entwässerungssystemen, **dadurch gekennzeichnet, dass** Mineralsalze ununterbrochen oder in Intervallen zum Bergwasser zudosiert werden,
wobei es sich bei den Mineralsalzen um Stabilisationssalze handelt,
wobei es sich bei den Stabilisationssalzen um wenigstens ein Salz ausgewählt aus der folgenden Gruppe handelt: Natriumsulfat, Natriumchlorid, Magnesiumsulfat, Magnesiumchlorid, Kalziummagnesiumchlorid, Natriummagnesiumchlorid, Kaliumsulfat, Kaliumchlorid, Kalziumchlorid oder Hydrate respektive Mischungen davon,
wobei die Stabilisationssalze die Bildung von neuen anorganischen Verkrustungen in Form von Kalkablagerungen, verhindern,
und wobei die Stabilisationssalze in einer Menge zum zu behandelnden Bergwasser zugegeben werden, dass am Ende des Entwässerungssystems eine Konzentration in Wasser im Bereich von 1-200 ppm erreicht wird.

2. Verfahren nach einem der vorhergehenden Ansprüche, **dadurch gekennzeichnet, dass** die Stabilisationssalze in einer Menge zum zu behandelnden Bergwasser zugegeben werden, dass am Ende des Entwässerungssystems eine Konzentration in Wasser im Bereich von 2- 50 ppm oder 3 - 20 ppm erreicht wird, wobei die Zugabe vorzugsweise am Anfang des Entwässerungssystems erfolgt sowie gegebenenfalls an einer oder mehreren weiteren Stellen entlang des Flusses des Bergwassers im Bauwerk.

3. Verfahren nach einem der vorhergehenden Ansprüche, **dadurch gekennzeichnet, dass** die Mineralsalze allein oder zeitlich und/oder örtlich alternierend, und/oder gleichzeitig und/oder im Gemisch/Kombination mit anderen Härtestabilisatoren wie insbesondere bevorzugt Fruchtsäuren, insbesondere Milchsäure, Polysuccinimid, Polyasparaginsäure oder Polycarbonsäure dem zu behandelnden Bergwasser zugegeben werden.

4. Verfahren nach einem der vorhergehenden Ansprüche, **dadurch gekennzeichnet, dass** das Entwässerungssystem einen primären, nicht zugänglichen und einen sekundären, zugänglichen Teil aufweist, und die Mineralsalze in flüssiger, bevorzugt wässriger gelöster Form mittels einer Dosieranlage, oder in fester Form als Depotsteine, dem sekundären Teil des Entwässerungssystems zugegeben werden.

5. Verfahren nach einem der vorhergehenden Ansprüche, **dadurch gekennzeichnet, dass** die Mineralsalze in flüssiger oder fester Form als Depotsteine, in den primären, nicht zugänglichen Teil des Entwässerungssystems eingebracht werden.

6. Verfahren nach Anspruch 5, **dadurch gekennzeichnet, dass** das Entwässerungssystem einen primären, nicht zugänglichen und einen sekundären, zugänglichen Teil aufweist, und es sich bei der festen Form um Depotsteine handelt, die einen Gehalt an Mineralsalzen aufweisen.

7. Verfahren nach Anspruch 5, dass die Mineralsalze mittels Rückführungssystem in das primäre, nicht zugängliche Entwässerungssystem gebracht werden.

8. Verfahren nach einem der Ansprüche 3 bis 7, **dadurch gekennzeichnet, dass** als anderer Härtestabilisator ausschließlich eine im wesentlichen 80-95%ige wässrige Lösung von Milchsäure verwendet wird.

9. Verfahren nach einem der vorhergehenden Ansprüche, **dadurch gekennzeichnet dass** es sich bei dem Mineralsalz um Natriumchlorid und/oder Magnesiumchlorid handelt.

10. Verfahren nach einem der vorhergehenden Ansprüche, **dadurch gekennzeichnet, dass** es sich bei Mineralsalz um Magnesiumchlorid handelt, und dass dieses dem Bergwasser als wässrige Lösung mit einem Gehalt von 25-33 Gew.%, vorzugsweise im Bereich von 30-33 Gew.% zugeführt wird,
und/oder dass es sich bei Mineralsalz um Natriumchlorid handelt, und dass dieses dem Bergwasser als wässrige Lösung mit einem Gehalt von 20-35 Gew.%, vorzugsweise im Bereich von 25-33 Gew.% zugeführt wird.

11. Verwendung eines Stabilisationssalzes in einem Verfahren nach einem der Ansprüche 1 - 10, ausgewählt aus der folgenden Gruppe: Natriumsulfat, Natriumchlorid, Magnesiumsulfat, Magnesiumchlorid, Kaliumsulfat, Kaliumchlorid, Kalziumchlorid oder Mischungen davon, zur Verhinderung von Ablagerungen in Form von Kalkablagerungen in primären, nicht zugänglichen und/oder sekundären, zugänglichen Entwässerungssystemen in einem Tunnel oder an einem Tunnel angeschlossen, indem das Stabilisationssalz zum Bergwasser als bevorzugt wässrige Lösung, bevorzugt dem sekundären Entwässerungssystem, und/oder als Feststoff, bevorzugt dem primären und/oder sekundären Entwässerungssystem, ununterbrochen oder in Intervallen zudosiert wird, wobei die Stabilisationssalze in einer Menge zum zu behandelnden Bergwasser zugegeben werden, dass am Ende des Entwässerungssystems eine Konzentration in Wasser im Bereich von 1-200 ppm erreicht wird.

12. Verwendung eines Depotsteins oder von Depotgranulat mit einem Gehalt von wenigstens 10 Gew.%, vorzugsweise von wenigstens 25 Gew.% eines Stabilisationssalzes, ausgewählt aus der folgenden Gruppe: Natriumsulfat, Natriumchlorid, Magnesiumsulfat, Magnesiumchlorid, Kaliumsulfat, Kaliumchlorid, Kalziumchlorid Kalziummagnesiumchlorid, Natriummagnesiumchlorid oder Hydrate oder Mischungen davon, insbesondere bevorzugt auf Basis von Carnallit (KMgCl₃ • 6H₂O), gegebenenfalls in Kombination mit anderen Stabilisationssystemen wie vorzugsweise Polysuccinimid, Polyasparaginsäure und/oder Polycarbonsäure und/oder Milchsäure, in einem Verfahren nach einem der Ansprüche 1 - 10 zur Verhinderung von Ablagerungen in Form von Kalkablagerungen in primären, unzugänglichen Entwässerungssystemen in einem Tunnel oder an einem Tunnel angeschlossen, wobei die Stabilisationssalze in einer Menge zum zu behandelnden Bergwasser zugegeben werden, dass am Ende des Entwässerungssystems eine Konzentration in Wasser im Bereich von 1-200 ppm erreicht wird.

## Claims

1. Method for preventing new deposits in drainage systems located in a tunnel or connected to a tunnel,
**characterized in that** mineral salts are added to the mountain water continuously or at intervals,
wherein the mineral salts are stabilizing salts,
wherein the stabilizing salts are at least one salt selected from the following group: sodium sulfate, sodium chloride, magnesium sulfate, magnesium chloride, calcium magnesium chloride, sodium magnesium chloride, potassium sulfate, potassium chloride, calcium chloride or hydrates or mixtures thereof,
wherein the stabilizing salts prevent the formation of new inorganic incrustations in the form of lime deposits,
and wherein the stabilizing salts are added to the mountain water to be treated in such an amount that at the end of the drainage system a concentration in water in the range of 1-200 ppm is reached.

2. Method according to one of the preceding claims, **characterized in that** the stabilization salts are added in an amount to the mountain water to be treated, that at the end of the drainage system a concentration in water in the range of 2- 50 ppm or 3- 20 ppm is reached, wherein the addition is preferably made at the beginning of the drainage system and optionally at one or more further points along the flow of the mountain water in the structure.

3. Method according to one of the preceding claims, **characterized in that** the mineral salts are added to the mountain water to be treated alone or alternately in time and/or place, and/or simultaneously and/or in a mixture/combination with other hardness stabilizers such as, in particular, preferably fruit acids, in particular lactic acid, polysuccinimide, polyaspartic acid or polycarboxylic acid.

4. Method according to one of the preceding claims, **characterized in that** the drainage system has a primary, non-accessible part and a secondary, accessible part, and the mineral salts are added in liquid, preferably aqueous dissolved form by means of a dosing unit, or in solid form as depot stones, to the secondary part of the drainage system.

5. Method according to one of the preceding claims, **characterized in that** the mineral salts in liquid or solid form as depot stones, are added to the primary, inaccessible part of the drainage system.

6. Method according to claim 5, **characterized in that** the drainage system has a primary, non-accessible and a secondary, accessible part, and the solid form is depot stones containing mineral salts.

7. Method according to claim 5, that the mineral salts are brought into the primary, non-accessible drainage system by means of a recirculation system.

8. Method according to any one of claims 3 to 7, **characterized in that** as other hardness stabilizer exclusively a substantially 80-95% aqueous solution of lactic acid is used.

9. Method according to one of the preceding claims, **characterized in that** the mineral salt is sodium chloride and/or magnesium chloride.

10. Method according to one of the preceding claims, **characterized in that** the mineral salt is magnesium chloride, and that this is added to the mountain water as an aqueous solution containing 25-33% by weight, preferably in the range of 30-33% by weight,
and/or that the mineral salt is sodium chloride, and that this is added to the mountain water as an aqueous solution with a content of 20-35 wt.%, preferably in the range of 25-33 wt.%.

11. Use of a stabilizing salt in a process according to one of claims 1-10, selected from the following group: sodium sulphate, sodium chloride, magnesium sulphate, magnesium chloride, potassium sulphate, potassium chloride, calcium chloride or mixtures thereof, for the prevention of deposits in the form of lime deposits in primary, inaccessible and/or secondary, accessible drainage systems in a tunnel or connected to a tunnel, by adding the stabilisation salt to the mountain water as a preferably aqueous solution, preferably to the secondary drainage system, and/or as solids, preferably to the primary and/or secondary drainage system, is dosed continuously or at intervals, wherein the stabilizing salts are added to the mountain water to be treated in an amount such that at the end of the drainage system a concentration in water in the range of 1-200 ppm is reached.

12. Uuse of a depot stone or depot granules containing at least 10% by weight, preferably at least 25% by weight % of a stabilising salt selected from the following group: sodium sulphate, sodium chloride, magnesium sulphate, magnesium chloride, potassium sulphate, potassium chloride, calcium chloride calcium magnesium chloride, sodium magnesium chloride or hydrates or mixtures thereof, preferably based on carnallite (KMgCl3 - 6H2O), optionally in combination with other stabilisation systems such as preferably polysuccinimide, polyaspartic acid and/or polycarboxylic acid and/or lactic acid, connected in a process according to one of claims 1-10 for the prevention of deposits in the form of lime deposits in primary, inaccessible drainage systems in a tunnel or connected to a tunnel, wherein the stabilizing salts are added to the mountain water to be treated in an amount such that at the end of the drainage system a concentration in water in the range of 1-200 ppm is reached.

## Revendications

1. Procédé pour prévenir de nouveaux dépôts dans les systèmes de drainage situés dans un tunnel ou reliés à un tunnel
**caractérisée par le fait que** des sels minéraux sont ajoutés à l'eau de montagne de manière continue ou par intervalles,
où les sels minéraux sont des sels stabilisateurs,
dans laquelle les sels stabilisants sont au moins un sel choisi dans le groupe suivant : sulfate de sodium, chlorure de sodium, sulfate de magnésium, chlorure de magnésium, chlorure de calcium, chlorure de sodium, sulfate de potassium, chlorure de potassium, chlorure de calcium ou hydrates ou leurs mélanges,
les sels stabilisateurs empêchent la formation de nouvelles incrustations inorganiques sous forme de dépôts calcaires,
et dans lequel les sels stabilisants sont ajoutés à l'eau de montagne à traiter en une quantité telle qu'une concentration dans l'eau comprise entre 1 et 200 ppm est atteinte à la fin du système de drainage.

2. Procédé selon l'une des revendications précédentes, **caractérisé en ce que** les sels de stabilisation sont ajoutés en une quantité à l'eau de montagne à traiter, **en ce qu'**à la fin du système de drainage, une concentration en eau dans la gamme de 2-50 ppm ou 3- 20 ppm est atteinte, dans lequel l'addition est faite de préférence au début du système de drainage et éventuellement à un ou plusieurs autres points le long de l'écoulement de l'eau de montagne dans la structure.

3. Procédé selon l'une des revendications précédentes, **caractérisé en ce que** les sels minéraux seuls ou alternativement dans le temps et/ou dans le lieu, et/ou simultanément et/ou en mélange/combinaison avec d'autres stabilisateurs de dureté tels que, en particulier, de préférence des acides de fruits, notamment l'acide lactique, le polysuccinimide, l'acide polyaspartique ou l'acide polycarboxylique, sont ajoutés à l'eau de montagne à traiter.

4. Procédé selon l'une des revendications précédentes, **caractérisé en ce que** le système de drainage comporte une partie primaire non accessible et une partie secondaire accessible, et les sels minéraux sont ajoutés sous forme liquide, de préférence dissoute dans l'eau, au moyen d'une unité de dosage, ou sous forme solide sous forme de pierres de dépôt, à la partie secondaire du système de drainage.

5. Procédé selon l'une des revendications précédentes, **caractérisé en ce que** les sels minéraux sous forme liquide ou solide en tant que pierres de dépôt sont ajoutés à la partie primaire, inaccessible, du système de drainage.

6. Procédé selon la revendication 5, **caractérisé en ce que** le système de drainage comporte une partie primaire non accessible et une partie secondaire accessible, et la forme solide est constituée de pierres de dépôt contenant des sels minéraux.

7. Procédé selon la revendication 5, dans lequel les sels minéraux sont introduits dans le système de drainage primaire, non accessible, au moyen d'un système de recirculation.

8. Procédé selon l'une des revendications 3 à 7, **caractérisé en ce que** seule une solution aqueuse d'acide lactique à 80-95 % est utilisée comme autre stabilisateur de dureté.

9. Procédé selon l'une des revendications précédentes, **caractérisé en ce que** le sel minéral est du chlorure de sodium et/ou du chlorure de magnésium.

10. Procédé selon l'une des revendications précédentes, **caractérisé en ce que** le sel minéral est du chlorure de magnésium et qu'il est ajouté à l'eau de montagne sous forme de solution aqueuse contenant 25-33% en poids, de préférence dans la gamme de 30-33% en poids,
et/ou que le sel minéral est du chlorure de sodium, et que celui-ci est ajouté à l'eau de montagne sous forme de solution aqueuse contenant 20-35 % en poids, de préférence dans la fourchette de 25-33 % en poids.

11. Utilisation d'un sel stabilisant dans un procédé selon l'une quelconque des revendications 1 à 10, choisi dans le groupe suivant : sulfate de sodium, chlorure de sodium, sulfate de magnésium, chlorure de magnésium, sulfate de potassium, chlorure de potassium, chlorure de calcium ou leurs mélanges, pour prévenir les dépôts sous forme de calcaires dans les systèmes de drainage primaires, inaccessibles et/ou secondaires, accessibles, dans un tunnel ou reliés à un tunnel, en ajoutant le sel stabilisateur à l'eau de montagne sous forme de solution de préférence aqueuse, de préférence au système de drainage secondaire, et/ou sous forme solide, de préférence au système de drainage primaire et/ou secondaire, est dosé en continu ou par intervalles, dans lequel les sels stabilisants sont ajoutés à l'eau de montagne à traiter en une quantité telle qu'une concentration en eau comprise entre 1 et 200 ppm est atteinte à la fin du système de drainage.

12. Utilisation d'une pierre de dépôt ou de granulés de dépôt contenant au moins 10 % en poids, de préférence au moins 25 % en poids, des sels stabilisants. % d'un sel stabilisant choisi dans le groupe suivant : sulfate de sodium, chlorure de sodium, sulfate de magnésium, chlorure de magnésium, sulfate de potassium, chlorure de potassium, chlorure de calcium, chlorure de calcium-magnésium, chlorure de sodium-magnésium ou hydrates ou mélanges de ceux-ci, en particulier de préférence à base de carnallite (KMgCl3 - 6H2O), éventuellement en combinaison avec d'autres systèmes de stabilisation tels que de préférence le polysuccinimide, l'acide polyaspartique et/ou l'acide polycarboxylique et/ou l'acide lactique, reliés dans un procédé selon l'une des revendications 1 à 10 pour la prévention des dépôts sous forme de dépôts calcaires dans les systèmes de drainage primaires inaccessibles dans un tunnel ou reliés à un tunnel, dans lequel les sels stabilisants sont ajoutés à l'eau de montagne à traiter dans une quantité telle qu'à la fin du système de drainage une concentration dans l'eau dans la gamme de 1 à 200 ppm est atteinte.
